# EUROPEAN PATENT SPECIFICATION

(11) **EP 2 295 759 B1**
(45) Date of publication and mention of the grant of the patent: **22.05.2013**
(21) Application number: 09170039.3
(22) Date of filing: 11.09.2009
(51) Int. Cl.: F02B 37/007, F02B 37/16, F02B 37/18, F02D 23/02, F02D 41/04

(54) **Method of and apparatus for controlling the operation of an internal combustion engine**
Verfahren und Vorrichtung zur Steuerung einer Brennkraftmaschine
Procédé et dispositif de commande d'un moteur à combustion interne

(43) Date of publication of application: 16.03.2011
(73) Proprietor: Ford Global Technologies, LLC, Dearborn, MI 48126 (US)
(72) Inventor: Chevalier, Alain, 4841, Henri-Chapelle (BE); Bartsch, Leonhard, 52074, Aachen (DE); Petrovic, Simon, 6227TV, Maastricht (NL); Roettger, Daniel, 4731, Eynatten (BE)
(74) Representative: Drömer, Hans-Carsten

(56) References cited:
- WO-A1-99/04147
- WO-A1-2009/097889
- DE-A1- 10 308 075
- DE-A1- 19 835 594
- DE-A1-102004 029 754
- US-A- 5 351 486

## Description

The present invention concerns a method of and apparatus for controlling the operation of an internal combustion engine, wherein the internal combustion engine has a multi-turbocharger system with at least two turbochargers.

Such multi-turbocharger systems are used in particular in premium vehicles having regard to increasing power requirements. Thus for example a dual-turbocharger system having a first and a second turbocharger can be operated in a "mono-turbocharger mode" in which only the first turbocharger is active for optimising the EGR flow rate (EGR = "exhaust gas recirculation"), and also in a "bi-turbocharger mode" in which the second turbocharger is also switched on typically in the range of medium to high power.

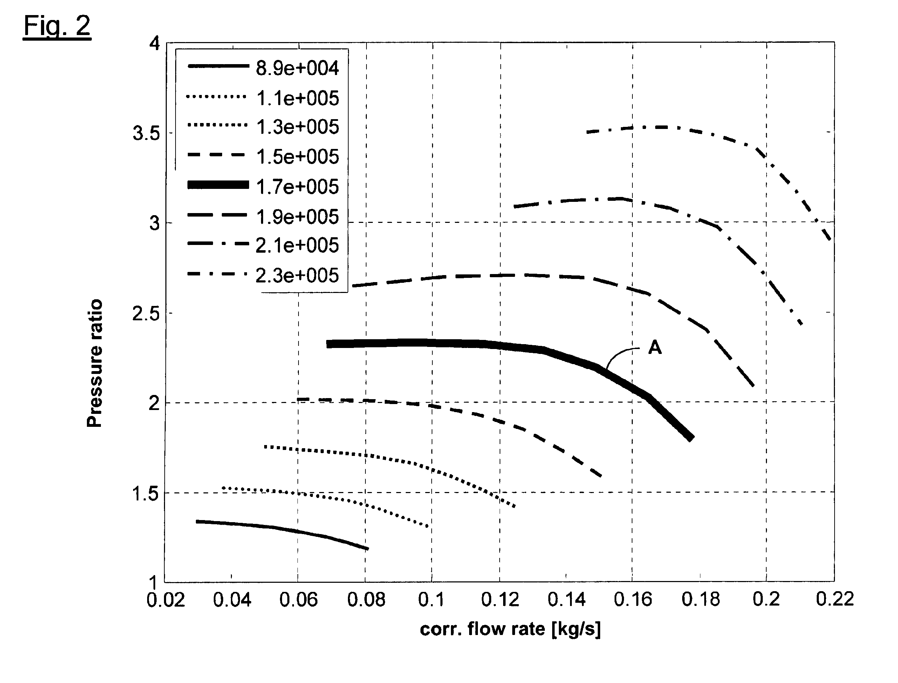

Switching over from the mono-turbocharger mode to the bi-turbocharger mode is conventionally scheduled on the basis of a fixed turbocharger speed (for example 180,000 revolutions per minute), which in turn in the characteristic of the compressor in the first turbocharger, which is shown only by way of example in Figure 2, that is to say in a diagram in which the pressure ratio is plotted as a function of the corrected flow rate, corresponds to a limit line "A" which is emphasised in bold in Figure 2. In that case a hysteresis range which is not shown in Figure 2 is also typically required to avoid what is referred to as hunting about the nominal speed.

DE 41 20 057 A1 discloses an internal combustion engine having a dual-turbocharger system in which a first turbocharger is operated at all intake air amounts and a second turbocharger is operated only at high intake air amounts. For the purposes of accelerating the second turbocharger before the mode of operation is altered from a single-turbocharger mode to a dual-turbocharger mode, an exhaust gas bypass valve is partially opened and then the degree to which the exhaust gas bypass valve is opened is gradually increased so that any torque shock which accompanies the change in the mode of operation is effectively suppressed.

WO 99/04147 A1 discloses a system and method for controlling a turbocharger, wherein in particular a secondary turbocharger is activated before a primary turbocharger overspeeds by monitoring the turbine speed, wherein a second control parameter is the engine RPM.

DE 103 08 075 A1 discloses a turbocharged motor vehicle internal combustion engine control circuit having a second switchable turbocharger fed by a second exhaust gas pipe. The transition between mono-turbocharger and bi-turbocharger operation is controlled by virtue of two wastegates. This transition control is accomplished based on turbocharger speed thresholds.

DE 198 35 594 A1 discloses a multicylinder internal combustion engine having a first exhaust turbocharger and at least one further turbocharger. A bi-turbocharger mode is activated by controlling movable air-deflecting elements dependent on the air mass flow, dependent on the boost pressure in the complete intake system, dependent on the turbocharger speeds or the respective differences or dependent on the temperature of the exhaust gas.

A problem to be solved by the present invention is to provide a method of and an apparatus for controlling the operation of an internal combustion engine having a multi-turbocharger system with at least two turbochargers, which permit more stable co-ordination of switching over between the mono-turbocharger mode and the multi-(in particular bi-)turbocharger mode.

That problem is solved by the method having the features set forth in independent claim 1 and the apparatus having the features set forth in claim 7.

In accordance with the invention therefore switching over between the mono-turbocharger mode and the bi-turbocharger mode is effected on the basis of the turbocharger speed which is ascertained by means of a turbocharger speed sensor (TSS).

As a result the method according to the invention achieves more stable co-ordination of the operation of switching over between a mono-turbocharger mode and a multi-(in particular bi-)turbocharger mode. Furthermore in implementation of the method according to the invention, no air mass flow sensor is required, which is advantageous inter alia insofar as such air mass flow sensors are known to suffer from drift or service life problems, in particular in frequent operation in inner-city driving.

When carrying out the method according to the invention, measurement of the turbocharger speed or a turbocharger speed sensor is required only at one of the turbochargers (the primary or first turbocharger) of the multi-turbocharger system.

In accordance with an embodiment switching over in accordance with the invention between a mono-turbocharger mode and a multi-(in particular bi-)turbocharger mode can be implemented on the basis of the turbocharger speed in combination with a conventional switching-over operation.

In accordance with an embodiment in this respect in the conventional switching-over operation, correction is effected in respect of ambient pressure and/or temperature, whereby it is possible to achieve robust calibration to realistic ambient conditions. In addition, in the context of the conventional switching-over operation, re-setting from the bi-turbocharger mode to the mono-turbocharger mode can also be triggered by incipient compressor surge.

In accordance with an embodiment switching over between the mono-turbocharger mode and the bi-turbocharger mode is scheduled only after the expiry of a calibrateable period of time.

The invention further concerns an apparatus for controlling the operation of an internal combustion engine, wherein the internal combustion engine has a multi-turbocharger system having at least two turbochargers, and wherein the apparatus is adapted to carry out a method according to one of the preceding paragraphs.

In regard to preferred configurations and advantages of the apparatus attention is directed to the foregoing description in relation to the method according to the invention.

Further configurations of the invention are to be found in the description and the appendant claims.

The invention is described in greater detail hereinafter by means of a preferred embodiment by way of example and with reference to the accompanying drawings in which:
- Figures 1a-e: show diagrams for describing a possible implementation of the operation of switching over between a mono-turbocharger mode and a bi-turbocharger mode in an internal combustion engine equipped with a multi-turbocharger system,
- Figure 2: shows a typical characteristic of a compressor, in which the pressure ratio is plotted in dependence on the corrected mass flow rate, and
- Figures 3a-b: show diagrams for describing an implementation by way of example of the method according to the invention of switching over between a mono-turbocharger mode and a bi-turbo- charger mode.

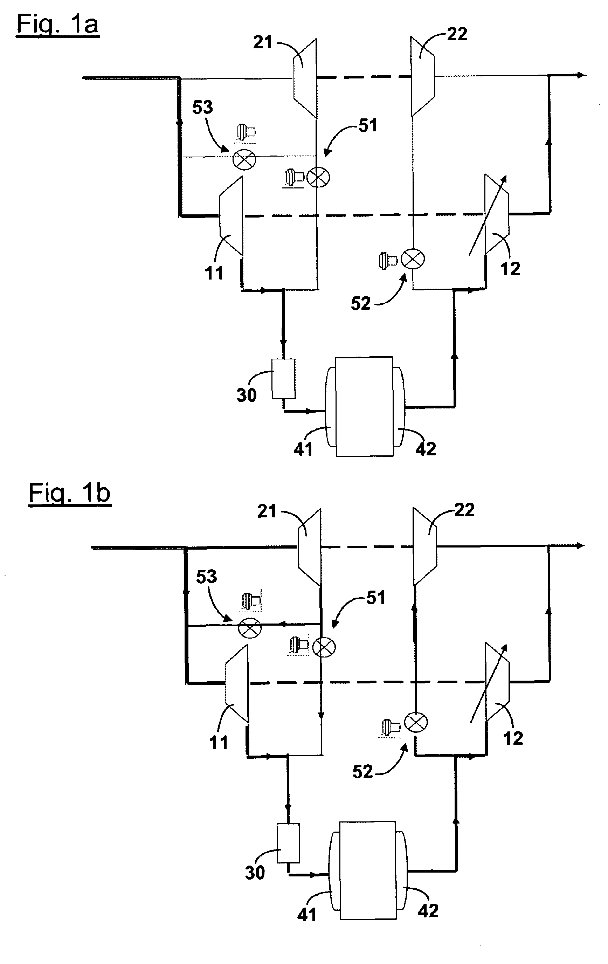

Reference is firstly made to Figures 1a-1e to describe a possible implementation of the operation of switching over between a mono-turbocharger mode and a bi-turbocharger mode in an internal combustion engine equipped with a multi-turbocharger system.

This multi-turbocharger system has a first turbocharger including a first compressor 11 which is driven by a first turbine 12, and a second turbocharger with a second compressor 21 which is driven by a second turbine 22. The first compressor 11 is connected by way of an intermediate cooler 30 to an intake manifold 41 of the internal combustion engine. The second compressor 21 is selectively switched on by way of a compressor shut-off valve 51 in the bi-turbocharger mode. Furthermore the exhaust manifold 42 is connected to the first turbine 12 of the first turbocharger, wherein the second turbine 22 of the second turbocharger is selectively switched on by way of an exhaust manifold shut-off valve 52 in the bi-turbocharger mode.

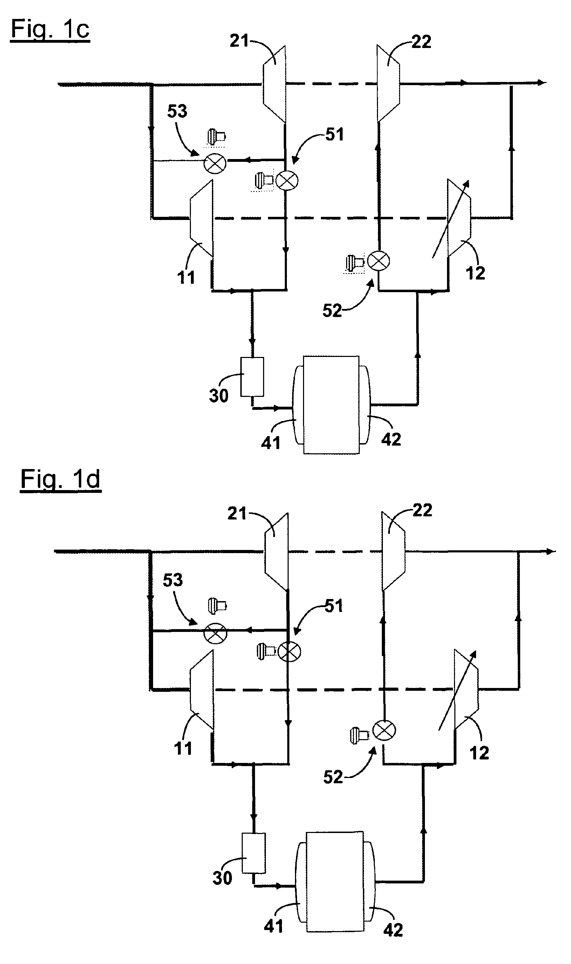

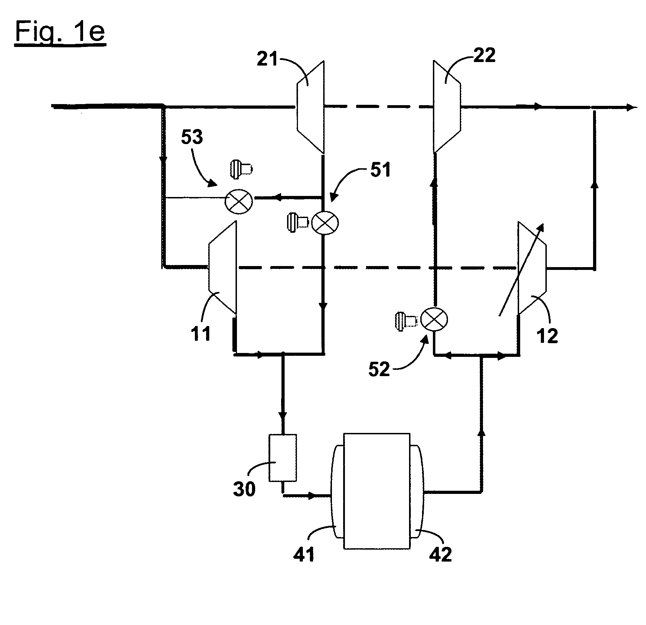

While Figure 1a shows the situation in the mono-turbocharger mode, switching over to or the transition to the bi-turbocharger mode is effected as shown in Figure 1 b, the bi-turbocharger mode being fully effective as shown in Figure 1 c. Figure 1 d shows the renewed transition to the mono-turbocharger mode which is achieved by the exhaust manifold shut-off valve 52 being closed, whereby less energy is transmitted to the second turbine 22.

Figure 1e finally shows a bi-turbocharger mode with exhaust gas recirculation (EGR) which is achieved by the recirculation valve 53 being completely closed and the compressor shut-off valve 51 being completely opened. In that situation both turbochargers are active, boost pressure regulation being effected solely by the first turbocharger.

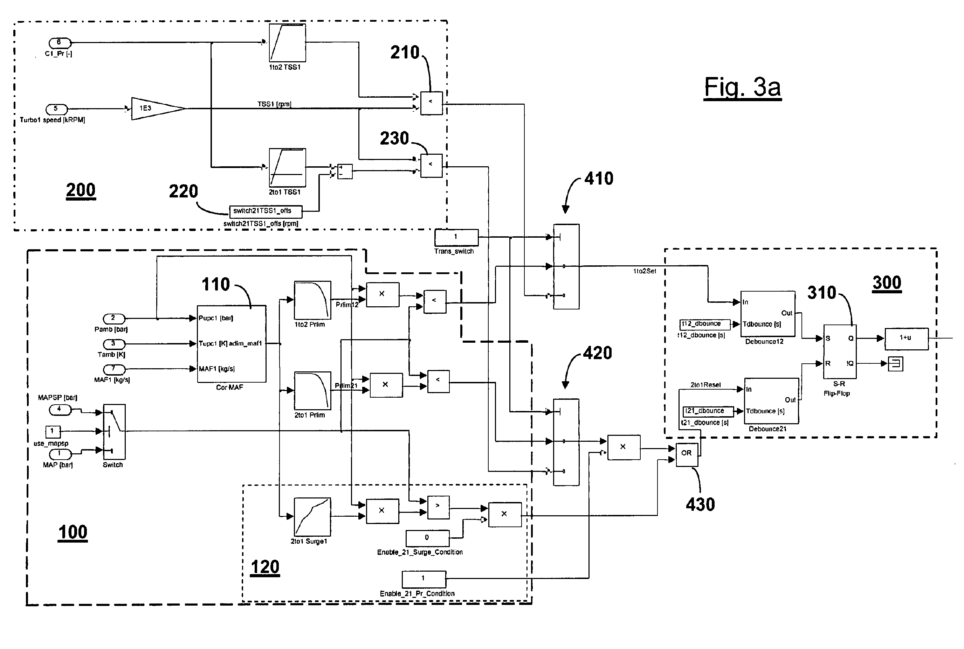

In the embodiment by way of example of implementation of the method according to the invention, as shown in Figures 3a-b, both conventional switching over between the mono-turbocharger mode and the bi-turbocharger mode and also switching over with implementation of the concept according to the invention are effected.

In this case, in the case of the conventional switching-over operation which is implemented in the branch 100 of the Figure 3a diagram, there is a change from the mono-turbocharger mode to the bi-turbocharger mode when the product f(MAF) * P_{AMB} is less than the boost pressure reference value (or than the measured boost pressure), P_{AMB} denoting the ambient pressure. In addition a change from the bi-turbocharger mode back into the mono-turbocharger mode occurs when the boost pressure reference value (or the measured boost pressure) is less than the product f(MAF) * P_{AMB}. In that respect correction in respect of ambient pressure and/or temperature occurs in a correction stage 110, whereby it is possible to achieve robust calibration to realistic ambient conditions.

Depending on the respective result of the comparison performed, a calibrateable variable 410 is set for changing over from the mono-turbocharger mode to the bi-turbocharger mode or a calibrateable variable 420 is set for correspondingly changing from the bi-turbocharger mode back to the mono-turbocharger mode.

As shown in the branch 120 a change back from the bi-turbocharger mode to the mono-turbocharger mode can be triggered by incipient compressor surge, that is to say by an operating state in which the currently prevailing pressure ratio is excessively high for the currently existing mass flow value and fluctuations in respect of mass flow and pressure occur. The alternative change from the bi-turbocharger mode to the mono-turbocharger mode at incipient compressor surge is implemented as shown in Figure 3a by an OR gate 430.

In the switching-over operation according to the invention which is implemented in the branch 200 of the diagram shown in Figure 3a, switching over from the mono-turbocharger mode to the bi-turbocharger mode is effected on the basis of a limit line or function which is parameterised in dependence on the pressure ratio.

In that respect a function f(PRC) is established, PRC denoting the pressure ratio of the compressor. If the value of f(PRC) is less than the current value of the turbocharger speed signal of the first turbocharger (comparison stage 210), a change from the mono-turbocharger mode to the bi-turbocharger mode is effected by suitable setting of a first calibrateable variable 410.

If in contrast the current value of the turbocharger speed signal of the first turbocharger is less than the value f(PRC) (having regard to a hysteresis offset in the block 220 with downstream-disposed comparison stage 230), the system switches back from the bi-turbocharger mode to the mono-turbocharger mode by suitable setting of a second calibrateable variable 420.

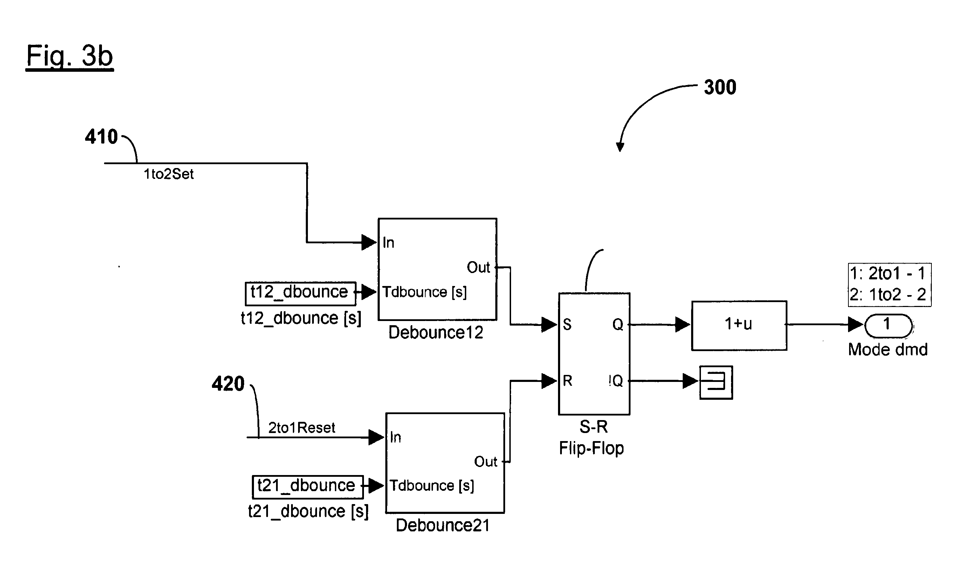

As shown in Figure 3b the respective setting of the calibrateable variable 410 or 420 respectively can also be held in a branch 300 by means of a suitable timer for a calibrateable period of time (t12_dbounce or t21_dbounce respectively) or subjected to a check, in which case real-time implementation can be implemented by means of an SR flip-flop 310.

## Claims

1. A method of controlling the operation of an internal combustion engine, wherein the internal combustion engine has a multi-turbocharger system having a first turbocharger and at least one second turbocharger,
the method has the following steps:
ascertaining at least one turbocharger speed signal of the first turbocharger, and
switching over between a mono-turbocharger mode in which only the first turbocharger is active and a bi-turbocharger mode in which the first turbocharger and the second turbocharger are active on the basis of the turbocharger speed signal,
**characterized in that**
switching over between the mono-turbocharger mode and the bi-turbocharger mode is effected on the basis of a limit line or function which is parameterised in dependence on the pressure ratio of the compressor of the first turbocharger, wherein the method has the following steps:
establishing a function f(PRC), wherein PRC denotes the pressure ratio of a compressor (11) of the first turbocharger;
comparing a current value of the turbocharger speed signal of the first turbocharger to a current value of the function f(PRC); and
setting a calibrateable variable (410, 420) for switching over between the mono-turbocharger mode and the bi-turbocharger mode on the basis of the result of said comparison;
wherein, if the value of f(PRC) is less than the current value of the turbocharger speed signal of the first turbocharger, a change from the mono-turbocharger mode to the bi-turbocharger mode is effected, and wherein, if the current value of the turbocharger speed signal of the first turbocharger is less than the value f(PRC), a change from the bi-turbocharger mode to the mono-turbocharger mode is effected.

2. A method according to claim 1,
**characterized in that**
measurement of the turbocharger speed is effected only at a single one of the turbochargers.

3. A method according to claim 1 or 2,
**characterized in that**
in a further mode for controlling the operation of the internal combustion engine the following steps are performed:
establishing a function f(MAF), wherein MAF denotes the air mass flow;
comparing a current value or a reference value for the boost pressure of the first turbocharger to the current value of the function f(MAF); and
setting a calibrateable variable (410, 420) for switching over between the mono-turbocharger mode and the bi-turbocharger mode on the basis of the result of said comparison.

4. A method according to claim 3,
**characterized in that**
correction of the current value of the function f(MAF) is effected on the basis of the ambient pressure and/or the ambient temperature.

5. A method according to one of the preceding claims,
**characterized in that**
switching over from the bi-turbocharger mode to the mono-turbocharger mode is effected at incipient compressor surge.

6. A method according to one of the preceding claims,
**characterized in that**
switching over between the mono-turbocharger mode and the bi-turbocharger mode is scheduled only after the expiry of a calibrateable period of time.

7. Apparatus for controlling the operation of an internal combustion engine, wherein the internal combustion engine has a multi-turbocharger system having at least two turbochargers,
**characterized in that**
the apparatus is adapted to carry out a method according to one of the preceding claims.

## Patentansprüche

1. Verfahren zur Steuerung des Betriebs einer Brennkraftmaschine, wobei die Brennkraftmaschine ein System mit mehreren Turboladern aufweist, das einen ersten Turbolader und mindestens einen zweiten Turbolader umfasst,
wobei das Verfahren die folgenden Schritte umfasst:
Ermitteln mindestens eines Turboladerdrehzahlsignals des ersten Turboladers, und
Umschalten zwischen einem Mono-Turboladermodus, bei dem nur der erste Turbolader aktiv ist, und einem Bi-Turboladermodus, bei dem der erste Turbolader und der zweite Turbolader basierend auf dem Turboladerdrehzahlsignal aktiv sind,
**dadurch gekennzeichnet, dass**
das Umschalten zwischen dem Mono-Turboladermodus und dem Bi-Turboladermodus basierend auf einer Grenzlinie oder -funktion erfolgt, die in Abhängigkeit vom Druckverhältnis des Verdichters des ersten Turboladers parametrisiert ist, wobei das Verfahren die folgenden Schritte umfasst:
Erstellen einer Funktion f(PRC), wobei PRC für das Druckverhältnis eines Verdichters (11) des ersten Turboladers steht;
Vergleichen eines Istwertes des Turboladerdrehzahlsignals des ersten Turboladers mit einem Istwert der Funktion f(PRC); und
Setzen einer kalibrierbaren Variablen (410, 420) zum Umschalten zwischen dem Mono-Turboladermodus und dem Bi-Turboladermodus basierend auf dem Vergleichsergebnis;
wobei, falls der Wert von f(PRC) kleiner als der Istwert des Turboladerdrehzahlsignals des ersten Turboladers ist, ein Wechsel aus dem Mono-Turboladermodus in den Bi-Turboladermodus erfolgt und wobei, falls der Istwert des Turboladerdrehzahlsignals des ersten Turboladers kleiner als der Wert f(PRC) ist, ein Wechsel aus dem Bi-Turboladermodus in den Mono-Turboladermodus erfolgt.

2. Verfahren nach Anspruch 1,
**dadurch gekennzeichnet, dass**
die Messung der Turboladerdrehzahl nur an einem einzigen der Turbolader erfolgt.

3. Verfahren nach Anspruch 1 oder 2,
**dadurch gekennzeichnet, dass**
in einem weiteren Steuermodus des Betriebs der Brennkraftmaschine die folgenden Schritte durchgeführt werden:
Erstellen einer Funktion f(MAF), wobei MAF für den Luftmassenstrom steht;
Vergleichen eines Istwerts oder eines Referenzwerts für den Aufladedruck des ersten Turboladers mit dem Istwert der Funktion f(MAF); und
Setzen einer kalibrierbaren Variablen (410, 420) zum Umschalten zwischen dem Mono-Turboladermodus und dem Bi-Turboladermodus basierend auf dem Vergleichsergebnis.

4. Verfahren nach Anspruch 3,
**dadurch gekennzeichnet, dass**
die Korrektur des Istwerts der Funktion f (MAF) auf der Basis des Umgebungsdrucks und/oder der Umgebungstemperatur erfolgt.

5. Verfahren nach einem der vorhergehenden Ansprüche,
**dadurch gekennzeichnet, dass**
das Umschalten von dem Bi-Turboladermodus in den Mono-Turboladermodus bei einsetzendem Kompressorpumpen erfolgt.

6. Verfahren nach einem der vorhergehenden Ansprüche,
**dadurch gekennzeichnet, dass**
das Umschalten zwischen dem Mono-Turboladermodus und dem Bi-Turboladermodus planmäßig erst nach dem Ablauf einer kalibrierbaren Zeitspanne erfolgt.

7. Vorrichtung zum Steuern des Betriebs einer Brennkraftmaschine, wobei die Brennkraftmaschine ein System mit mehreren Turboladern aufweist, das mindestens zwei Turbolader umfasst,
**dadurch gekennzeichnet, dass**
die Vorrichtung dazu ausgeführt ist, ein Verfahren nach einem der vorhergehenden Ansprüche durchzuführen.

## Revendications

1. Procédé pour commander le fonctionnement d'un moteur à combustion interne, lequel moteur à combustion interne est doté d'un système à plusieurs turbocompresseurs comportant un premier turbocompresseur et au moins un deuxième turbocompresseur, le procédé comprenant les étapes consistant à :
déterminer au moins un signal de vitesse de rotation de turbocompresseur du premier turbocompresseur, et
commuter entre un mode à un seul turbocompresseur dans lequel seul le premier turbocompresseur est actif et un mode à deux turbocompresseurs dans lequel le premier turbocompresseur et le deuxième turbocompresseur sont actifs sur la base du signal de vitesse de rotation de turbocompresseur,
**caractérisé en ce que**
l'étape consistant à commuter entre le mode à un seul turbocompresseur et le mode à deux turbocompresseurs est mise en oeuvre sur la base d'une fonction ou ligne limite qui est paramétrée en fonction du rapport de pressions du compresseur du premier turbocompresseur,
lequel procédé comprend les étapes consistant à :
établir une fonction f(PRC), PRC désignant le rapport de pressions d'un compresseur (11) du premier turbocompresseur ;
effectuer une comparaison entre une valeur actuelle du signal de vitesse de rotation de turbocompresseur du premier turbocompresseur et une valeur actuelle de la fonction f(PRC) ; et
définir une variable étalonnable (410, 420) pour commuter entre le mode à un seul turbocompresseur et le mode à deux turbocompresseurs sur la base du résultat de ladite comparaison ;
si la valeur de f(PRC) est inférieure à la valeur actuelle du signal de vitesse de rotation de turbocompresseur du premier turbocompresseur, basculer alors du mode à un seul turbocompresseur sur le mode à deux turbocompresseurs, et si la valeur actuelle du signal de vitesse de rotation de turbocompresseur du premier turbocompresseur est inférieure à la valeur de f(PRC), basculer alors du mode à deux turbocompresseurs sur le mode à un seul turbocompresseur.

2. Procédé selon la revendication 1,
**caractérisé en ce que**
une mesure de la vitesse de rotation de turbocompresseur est réalisée uniquement au niveau d'un seul des turbocompresseurs.

3. Procédé selon la revendication 1 ou 2,
**caractérisé en ce que**
dans un mode supplémentaire de commande du fonctionnement du moteur à combustion interne, le procédé comprend les étapes consistant à :
établir une fonction f(MAF), MAF désignant le débit massique d'air ;
effectuer une comparaison entre une valeur actuelle ou une valeur de référence pour la pression de suralimentation du premier turbocompresseur et la valeur actuelle de la fonction f(MAF) ; et
définir une variable étalonnable (410, 420) pour commuter entre le mode à un seul turbocompresseur et le mode à deux turbocompresseurs sur la base du résultat de ladite comparaison.

4. Procédé selon la revendication 3,
**caractérisé en ce que**
une correction de la valeur actuelle de la fonction f(MAF) est réalisée sur la base de la pression ambiante et/ou de la température ambiante.

5. Procédé selon l'une des revendications précédentes,
**caractérisé en ce que**
l'étape consistant à commuter du mode à deux turbocompresseurs sur le mode à un seul turbocompresseur est mise en oeuvre dès les premiers signes d'un pompage de compresseur.

6. Procédé selon l'une des revendications précédentes,
**caractérisé en ce que**
l'étape consistant à commuter entre le mode à un seul turbocompresseur et le mode à deux turbocompresseurs est programmée uniquement suite à l'expiration d'une période de temps étalonnable.

7. Appareil pour commander le fonctionnement d'un moteur à combustion interne, lequel moteur à combustion interne est doté d'un système à plusieurs turbocompresseurs comportant au moins deux turbocompresseurs,
**caractérisé en ce que**
l'appareil est apte à mettre en oeuvre un procédé selon l'une des revendications précédentes.
